# EUROPEAN PATENT APPLICATION

(11) **EP 4 564 547 A1**
(43) Date of publication of application: **04.06.2025**
(21) Application number: 24196820.5
(22) Date of filing: 27.08.2024
(51) Int. Cl.: H01M 50/147, H01M 50/202, H01M 50/209, H01M 50/342, H01M 50/103

(54) **BATTERY CELL AND BATTERY MODULE INCLUDING THE SAME**

(30) Priority: 30.11.2023 KR 20230171230
(71) Applicant: SAMSUNG SDI CO., LTD., Giheung-gu Yongin-si, Gyeonggi-do 17084 (KR)
(72) Inventor: LEE, Hyeok, 16678 Suwon-si (KR); YUN, Chul Jung, 16678 Suwon-si (KR)
(74) Representative: Marks & Clerk LLP

(57) **Abstract**

A battery cell includes: a case accommodating an electrode assembly; a cap plate on the case and sealing the case; a vent in the cap plate and configured to open in response to a change in pressure in the case; a blocking member seated on the cap plate and facing the vent; and a fixing member surrounding the case and the cap plate and fixing the blocking member to the cap plate.

## Description

### BACKGROUND

### 1. Field

Aspects of embodiments of the present disclosure relate to a battery module.

### 2. Discussion of Related Art

Different from primary batteries that are not designed to be recharged, secondary batteries are designed to be (re)charged and discharged. Low-capacity secondary batteries are used in small portable electronic devices, such as smartphones, feature phones, laptop computers, digital cameras, and camcorders, while high-capacity secondary batteries are widely used as driving power sources and power storage batteries for motors in hybrid vehicles, electric vehicles, and the like. A secondary battery generally includes an electrode assembly including a positive electrode and a negative electrode, a case for accommodating the same, and an electrode terminal connected to the electrode assembly.

The above-described information forms the background of the present disclosure and is intended to improve understanding of the background of the present disclosure. Thus, it may include information that does not constitute the related (or prior) art.

### SUMMARY

Embodiments of the present disclosure provide a battery cell capable of preventing heat propagation and a battery module including the same.

These and other aspects and features of the present disclosure will be described in, or will be apparent from, the following description of some embodiments of the present disclosure.

A battery cell, according to an embodiment of the present disclosure, includes a case accommodating an electrode assembly, a cap plate on the case and sealing the case, a vent in the cap plate and configured to open in response to a change in pressure in the case, a blocking member seated on the cap plate and facing the vent, and a fixing member surrounding the case and the cap plate and fixing the blocking member to the cap plate.

An area of the blocking member may be greater than an area of the vent.

The blocking member may include mica.

The fixing member may include a first fixing member surrounding the case and a second fixing member extending from the first fixing member and surrounding the blocking member.

The blocking member may have a first end portion and a second end portion spaced apart from each other in a first direction, and the second fixing member may have a first extension portion extending from one side of the first fixing member and surrounding the first end portion and a second extension portion extending from another side of the first fixing member and surrounding the second end portion.

A length of each of the first extension portion and the second extension portion parallel to the first direction may be in a range of 5 mm to 10 mm.

The first extension portion and the second extension portion may press the first end portion and the second end portion toward the cap plate, respectively.

A length of each of the first extension portion and the second extension portion parallel to a second direction crossing the first direction may be greater than a length of the blocking member parallel to the second direction, and inner surfaces of the first extension portion and the second extension portion may be attached to outer surfaces of the blocking member and the cap plate.

The first end portion and the second end portion may be on the cap plate.

The first end portion and the second end portion may extend outwardly from the cap plate and may cover a side surface of the case.

A length of each of the first end portion and the second end portion parallel to the side surface of the case may be in a range of 5 mm to 10 mm.

The battery cell may further include an adhesive member between the cap plate and the blocking member.

The blocking member may have a third end portion and a fourth end portion spaced apart from each other in a second direction crossing the first direction, and the adhesive member may include a first adhesive member between the third end portion and the cap plate and a second adhesive member between the fourth end portion and the cap plate.

A battery module, according to another embodiment of the present disclosure, includes a housing and a plurality of battery cells inside the housing. The battery cells include a case accommodating an electrode assembly, a cap plate on the case and sealing the case, a vent in the cap plate and configured to open in response to a change in pressure in the case, a blocking member seated on the cap plate and facing the vent, and a fixing member surrounding the case and the cap plate and fixing the blocking member to the cap plate. In some embodiments, the or each cell may be as defined above or below.

The fixing member may include a first fixing member surrounding the case and a second fixing member extending from the first fixing member and surrounding the blocking member.

The plurality of battery cells may be arranged in a first direction, the blocking member may have a first end portion and a second end portion spaced apart from each other in the first direction, and the second fixing member may include a first extension portion extending from one side of the first fixing member and covering the first end portion and a second extension portion extending from another side of the first fixing member and covering the second end portion.

At least some of the above and other features of the invention are set out in the claims.

### BRIEF DESCRIPTION OF THE DRAWINGS

The drawings attached to this specification illustrate some embodiments of the present disclosure and describe aspects and features of the present disclosure together with the detailed description of the present disclosure. However, the present disclosure should not be construed as being limited to the drawings, in which:
FIG. 1 is a schematic exploded perspective view of a battery module according to an embodiment of the present disclosure;
FIG. 2 is a schematic plan view of the battery module shown in FIG. 1;
FIG. 3 is a schematic partial cross-sectional view of the battery module shown in FIGS. 1 and 2;
FIG. 4 is a schematic perspective view of a battery cell according to an embodiment of the present disclosure;
FIG. 5 is a schematic exploded perspective view of the battery cell shown in FIG. 4;
FIG. 6 is a cross-sectional view taken along the line A-A' in FIG. 4;
FIG. 7 is a partial cross-sectional view taken along the line B-B' in FIG. 4;
FIG. 8 is a partial cross-sectional perspective view taken along the line B-B' in FIG. 4;
FIG. 9 is a schematic partial cross-sectional view of a blocking member according to an embodiment of the present disclosure;
FIG. 10 is a schematic partial cross-sectional perspective view of the blocking member shown in FIG. 9;
FIG. 11 is a schematic partial cross-sectional view of an adhesive member according to another embodiment of the present disclosure; and
FIG. 12 is a schematic exploded perspective view of an implementation of the adhesive member.

### DETAILED DESCRIPTION

Herein, some embodiments of the present disclosure will be described, in detail, with reference to the accompanying drawings. The terms or words used in this specification and claims should not be construed as being limited to their usual or dictionary meaning and should be interpreted as have a meaning and concept consistent with the technical idea of the present disclosure based on the principle that the inventor can be his/her own lexicographer to appropriately define the concept of a term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

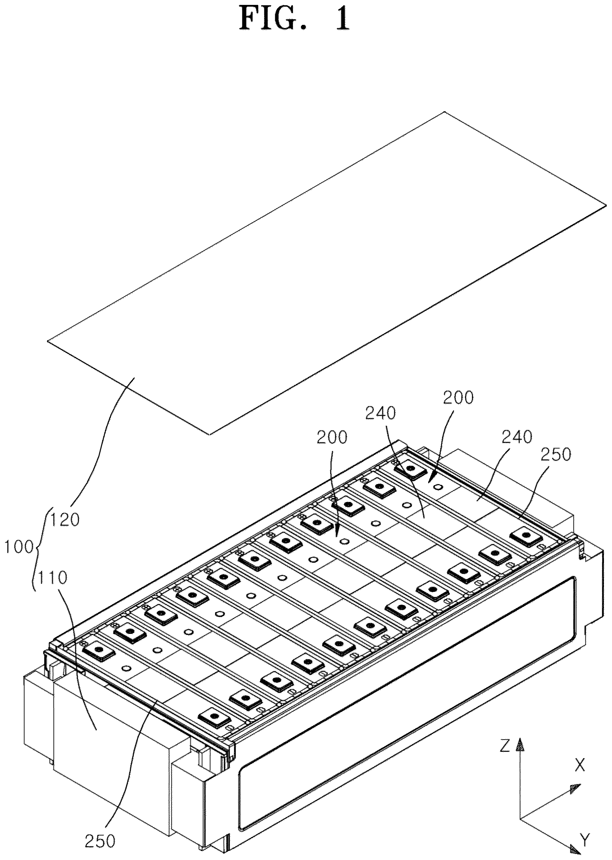

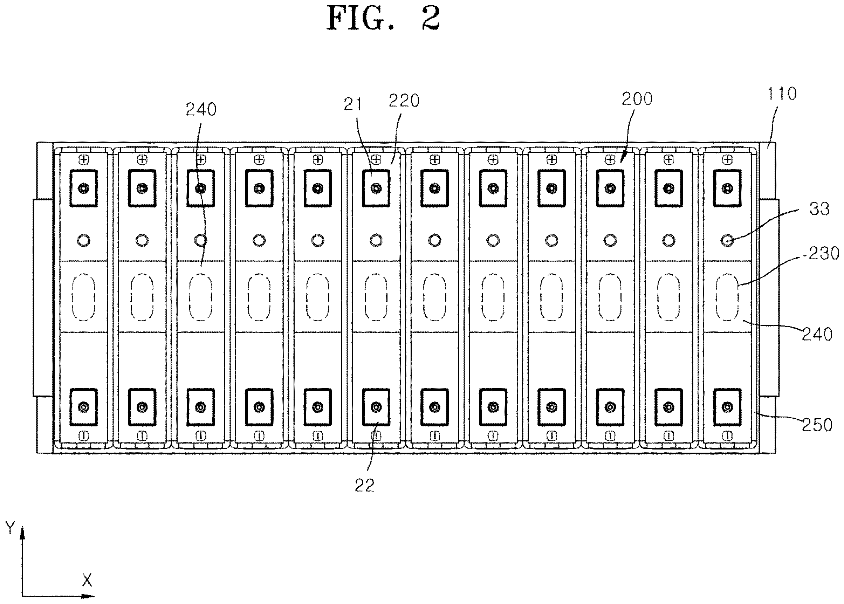

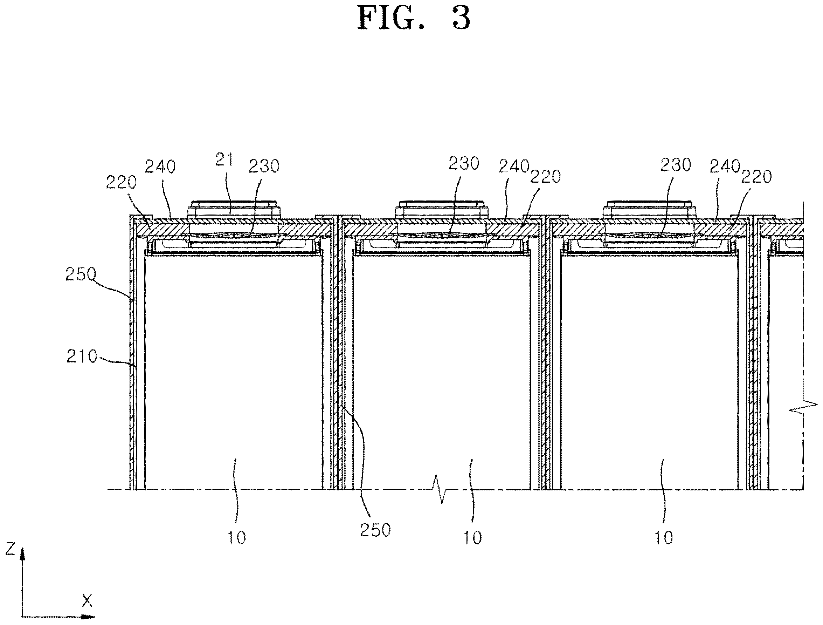

FIG. 1 is a schematic exploded perspective view of a battery module according to an embodiment of the present disclosure. FIG. 2 is a schematic plan view of the battery module shown in FIG. 1. FIG. 3 is a schematic cross-sectional view of the battery module shown in FIGS. 1 and 2.

Referring to FIGS. 1 to 3, the battery module, according to the illustrated embodiment, includes a housing 100 and a battery cell 200.

The housing 100 may form an approximate exterior (e.g., an exterior surface and/or appearance) of the battery module and may entirely support the battery cell 200, which will be described below.

The housing 100 may include a housing body 110 and a housing cover 120.

The housing body 110 may have a hollow box shape with an open upper side. A cross-sectional shape of the housing body 110 may have various suitable shapes other than the quadrangular shape shown in FIG. 1.

The housing cover 120 may open or close an internal space of the housing body 110. The housing cover 120 may be substantially plate shaped and may be disposed to face (e.g., to cover) the open upper side of the housing body 110. The housing cover 120 may be detachably coupled to the housing body 110 through various coupling methods including bolting, fitting, and the like.

The battery cell 200 may be a unit structure that stores and supplies power in and from the battery module.

A plurality of battery cells 200 may be provided. The plurality of battery cells 200 may be disposed inside the housing 100. The plurality of battery cells 200 may be arranged in a first direction inside the housing 100. The first direction may be a direction parallel to an X-axis in FIG. 1. The number of battery cells 200 is not limited to that shown in FIG. 1, and the design may be changed in various ways according to a size or the like of the battery module.

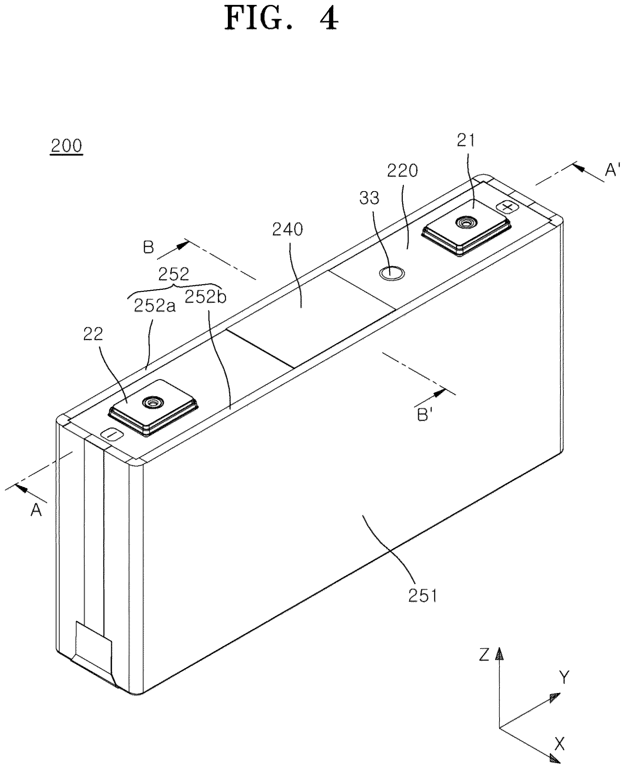

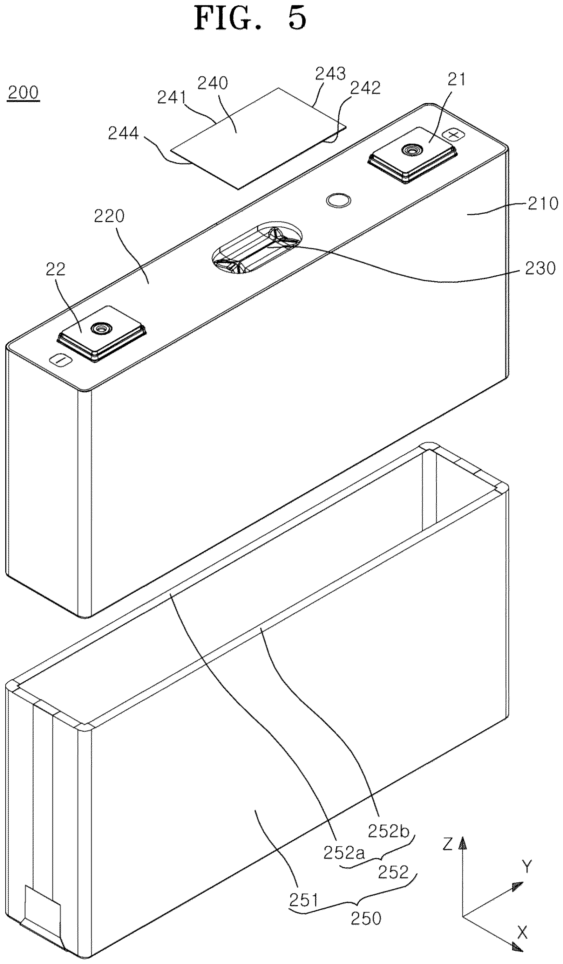

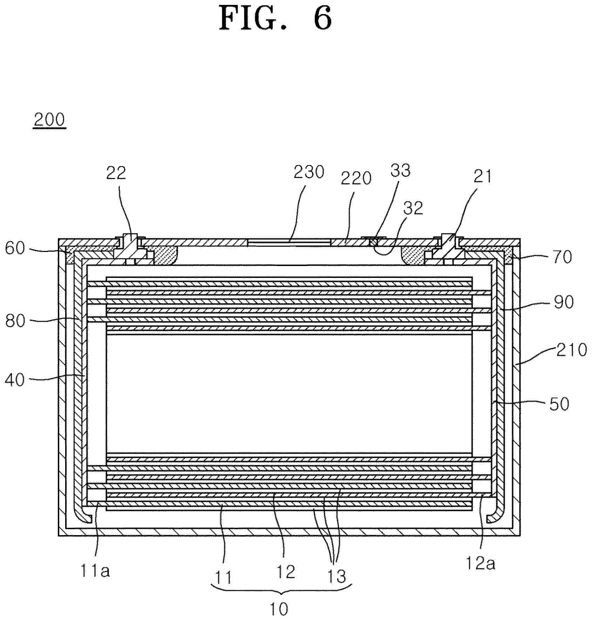

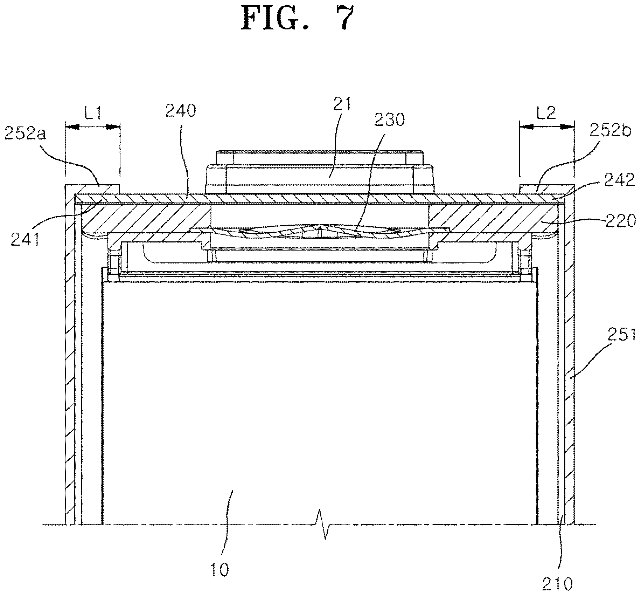

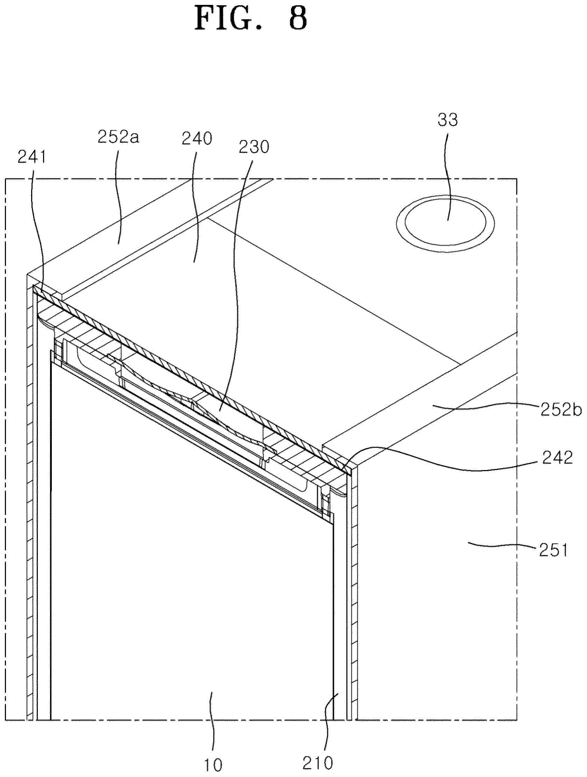

FIG. 4 is a schematic perspective view of a battery cell according to an embodiment of the present disclosure. FIG. 5 is a schematic exploded perspective view of the battery cell shown in FIG. 4. FIG. 6 is a cross-sectional view taken along the line A-A in FIG. 4. FIG. 7 is a cross-sectional view taken along the line B-B' in FIG. 4. FIG. 8 is a cross-sectional perspective view taken along the line B-B' in FIG. 4.

Referring to FIGS. 4 to 8, the battery cell 200 may include a case 210, a cap plate 220, a vent 230, a blocking member 240, and a fixing member 250.

Hereinafter, an embodiment in which the battery cell 200 is a prismatic lithium ion secondary will be described. However, the present disclosure is not limited thereto, and the battery cell 200 may be, for example, a lithium polymer battery or a cylindrical battery.

The case 210 may form an approximate exterior of the battery cell 200. The case 210 may have a hollow can shape with an open upper side. The case 210 may be made of a conductive metal, such as aluminum, an aluminum alloy, or nickel-plated steel.

At least one electrode assembly 10, which is formed by winding a positive electrode 11 and a negative electrode 12 with a separator 13, which is an insulator, interposed therebetween, may be accommodated inside the case 210. However, the present disclosure is not limited thereto, and the electrode assembly 10 may have a structure in which a positive electrode and a negative electrode, each including a plurality of sheets, are alternately stacked with a separator interposed therebetween.

The positive electrode 11 and the negative electrode 12 may have coated portions, which are regions at where a current collector made of thin metal foil is coated with an active material, and uncoated portions 11a and 12a which are regions of the current collector that are uncoated (or not coated) with the active material.

The cap plate 220 may be disposed on the case 210 and may seal the case 210. The cap plate 220 may be substantially plate shaped and may be disposed to face an open side of the case 210, for example, an upper surface of the case 210. The cap plate 220 may be fixed to an upper end portion of the case 210 through various types of coupling methods including welding, bolting, and the like. Accordingly, an internal space of the case 210 may be sealed by an inner surface of the case 210 and an inner surface of the cap plate 220. Similar to the case 210, the cap plate 220 may be made of a conductive material, such as aluminum, an aluminum alloy, or nickel-plated steel.

A positive electrode terminal 21 electrically connected to the positive electrode 11 of the electrode assembly 10 and a negative electrode terminal 22 electrically connected to the negative electrode 12 may be formed in (or may extend through) the cap plate 220. The positive electrode terminal 21 and the negative electrode terminal 22 may be installed to pass through the cap plate 220 and protrude upwardly from the cap plate 220. The positive electrode terminal 21 and the negative electrode terminal 22 may be disposed to be spaced apart from each other in a second direction that crosses (e.g., intersects) a first direction. The second direction may be a direction parallel to a Y-axis direction in FIG. 1.

Outer peripheral surfaces of upper pillars of the positive electrode terminal 21 and the negative electrode terminal 22 that protrude outwardly from the cap plate 220 may be threaded and fixed to the cap plate 220 by using nuts. However, the present disclosure is not limited thereto, and the positive electrode terminal 21 and the negative electrode terminal 22 may have a rivet structure to be riveted to the cap plate 220 or may be welded and coupled to the cap plate 220.

The positive electrode terminal 21 and the negative electrode terminal 22 may be electrically connected to current collectors including first and second current collectors 40 and 50 (hereinafter referred to as positive and negative electrode current collectors) joined to a positive electrode uncoated portion 11a and a negative electrode uncoated portion 12a through welding.

For example, the positive electrode terminal 21 and the negative electrode terminal 22 may be coupled to the positive and negative electrode current collectors 40 and 50 through welding. However, the present disclosure is not limited thereto, and the positive and negative electrode terminals 21 and 22 and the positive and negative electrode current collectors 40 and 50 may be formed by being integrally coupled (e.g., may be integrally formed).

In addition, an insulating member may be installed between the electrode assembly 10 and the cap plate 220. The insulating member may include first and second lower insulating members 60 and 70, and each of the first and second lower insulating members 60 and 70 may be installed between the electrode assembly 10 and the cap plate 220.

In addition, according to the illustrated embodiment, one end portion of a separation member that may be installed to face one side surface of the electrode assembly 10 may be installed between the insulating member and each of the positive electrode terminal 21 and the negative electrode terminal 22.

The separation member may include first and second separation members 80 and 90.

One end portion of each of the first and second separation members 80 and 90 may be installed to face a respective one of side surfaces of the electrode assembly 10, and the other end portions may be installed between their respective first and second lower insulating members 60 and 70 and the respective one of the positive and negative electrode terminals 21 and 22.

The positive electrode terminal 21 and the negative electrode terminal 22 welded and coupled to the positive electrode current collector 40 and the negative electrode current collector 50 may be coupled to the first and second lower insulating members 60 and 70 and respective ones of end of the first and second separation members 80 and 90.

In addition, an electrolyte injection hole (e.g., an electrolyte injection opening) 32 in which a sealing stopper 33 may be installed may be formed in the cap plate 220.

The vent 230 may be provided in the cap plate 220 and may be opened or closed (e.g. may burst) in response to a change in internal pressure in the case 210. For example, the vent 230 may remain closed to seal the case 210 during normal operation of the electrode assembly 10. The vent 230 may open (e.g. may burst) when the internal pressure of the case 210 rises to a reference pressure or more due to, for example, overcharging or an outbreak of fire, to discharge emissions, such as flames and gases from the inside to the outside of the case 210.

The vent 230 may be disposed between the positive electrode terminal 21 and the negative electrode terminal 22 in the cap plate 220. The vent 230 may be formed to be thinner than (e.g., may be a thinned portion of) the cap plate 220. A notch or the like that induces a fracture in the vent 230 when the internal pressure of the case 210 rises may be formed in (or around) the vent 230.

The blocking member 240 may be seated on the cap plate 220 and disposed to face the vent 230. The blocking member 240 may block heat from being transferred to adjacent battery cells 200 when the battery cell 200 experiences thermal runaway and may block flames or gases from flowing into the vent 230 of the adjacent battery cell 200, thereby preventing or mitigating the risk of cascading thermal runaway of the battery cells 200.

The blocking member 240 may be individually installed for each battery cell 200, and the blocking members 240 may be separated from each other. Accordingly, in the event of thermal runaway of any one of the battery cells 200, the blocking member 240 installed in the corresponding battery cell 200 may be separated from the cap plate 220 independently of the blocking members 240 installed in the remaining battery cells 200, thereby preventing the heat blocking performance of the remaining battery cells 200 from being degraded.

The blocking member 240 may be sheet shaped with substantially a quadrangular cross section. The blocking member 240 may be seated on an upper surface of the cap plate 220 at a position vertically facing the vent 230. An area of the blocking member 240 may be greater than an area of the vent 230.

The blocking member 240 may include a material with high heat resistance and diabatic performance, such as mica, to prevent damage from heat and prevent heat applied from the outside from being transferred to the inside of the case 210.

The blocking member 240 may have a first end portion 241, a second end portion 242, a third end portion 243, and a fourth end portion 244.

The first end portion 241 and the second end portion 242 may be a pair of end regions spaced apart from each other in a direction parallel to the first direction from among all end regions of the blocking member 240 disposed along a periphery of the blocking member 240.

The first end portion 241 and the second end portion 242 may be disposed on the cap plate 220. For example, a length between the first end portion 241 and the second end portion 242 parallel to the first direction may be less than or equal to a length of the cap plate 220 parallel to the first direction.

The third end portion 243 and the fourth end portion 244 may be a pair of end regions spaced apart from each other in a direction parallel to the second direction from among all the end regions of the blocking member 240 disposed along the periphery of the blocking member 240. The third end portion 243 may be disposed to face the positive electrode terminal 21 in the direction parallel to the second direction, and the fourth end portion 244 may be disposed to face the negative electrode terminal 22 in the direction parallel to the second direction. A length between the third end portion 243 and the fourth end portion 244 may be less than a length between the positive electrode terminal 21 and the negative electrode terminal 22.

The fixing member 250 may be disposed to surround the case 210 and the cap plate 220 and to fix the blocking member 240 to the cap plate 220. For example, the fixing member 250 may protect the case 210 from external impacts, foreign materials, or the like and may fix the blocking member 240 to the cap plate 220 during a manufacturing process of the battery cell 200. Accordingly, the blocking member 240 can be stably fixed to the cap plate 220 without additional processes, such as attachment by using double-sided tape and without separate structures.

The fixing member 250 may be formed to have a thin sheet shape with an inner surface coated with an adhesive material. The fixing member 250 may include a synthetic resin material, such as polyethylene terephthalate (PET), polybutylene terephthalate (PBT), or polypropylene (PP).

The fixing member 250 may include a first fixing member 251 and a second fixing member 252.

The first fixing member 251 may form an exterior of one side of the fixing member 250 and may be disposed to surround the case 210. Similar to the case 210, the first fixing member 251 may have a hollow box shape with an open upper side. The first fixing member 251 may be disposed such that an inner surface thereof entirely surrounds (e.g., covers) the remaining peripheral surface of the case 210 excluding the open side of the case 210. The inner surface of the first fixing member 251 may be attached and fixed to an outer surface of the case 210 by an adhesive material with which the inner surface is coated.

The second fixing member 252 may form an exterior of the other side of the fixing member 250. The second fixing member 252 may extend from the first fixing member 251 and may be disposed to surround (e.g., to cover) the cap plate 220 and the blocking member 240.

The second fixing member 252 may include a first extension portion 252a and a second extension portion 252b.

The first extension portion 252a may extend from one side of the first fixing member 251 and may be disposed to surround the first end portion 241 of the blocking member 240. For example, the first extension portion 252a may extend in the direction parallel to the first direction from an upper end of the first fixing member 251 disposed parallel to the first end portion 241 of the blocking member 240. In such an embodiment, the first extension portion 252a and the first fixing member 251 may have a cross section with approximately a "I" shape (or a "7" or an inverted "L" shape).

An inner surface of the first extension portion 252a may be disposed to surround the first end portion 241 of the blocking member 240 and an outer surface of the cap plate 220. The inner surface of the first extension portion 252a may be attached and fixed to an outer surface of the first end portion 241 of the blocking member 240 by using an adhesive material. The first extension portion 252a may press the first end portion 241 toward the cap plate 220 with an adhesive force with the first end portion 241 and a tensile force applied from the first fixing member 251.

The second extension portion 252b may extend from the other side of the first fixing member 251 and may be disposed to surround the second end portion 242 of the blocking member 240. For example, the second extension portion 252b may extend in the direction parallel to the first direction from an upper end of the first fixing member 251 disposed parallel to the second end portion 242 of the blocking member 240. In such an embodiment, the second extension portion 252b and the first fixing member 251 may have a cross section with approximately a "1" shape (or a "7" or an inverted "L" shape).

An inner surface of the second extension portion 252b may be disposed to surround the second end portion 242 of the blocking member 240 and the outer surface of the cap plate 220. The inner surface of the second extension portion 252b may be attached and fixed to an outer surface of the second end portion 242 of the blocking member 240 by using an adhesive material. The second extension portion 252b may press the second end portion 242 toward the cap plate 220 with an adhesive force with the second end portion 242 and a tensile force applied from the first fixing member 251.

A length L1 of the first extension portion 252a parallel to the first direction and a length L2 of the second extension portion 252b parallel to the first direction may each be in a range of about 5 mm to about 10 mm. When the length of each of the first extension portion 252a and the second extension portion 252b is less than about 5 mm, a contact area with the blocking member 240 may be excessively reduced, and thus, the blocking member 240 may be separated from the cap plate 220. When the length of each of the first extension portion 252a and the second extension portion 252b is greater than about 10 mm, the first extension portion 252a and the second extension portion 252b may overlap the vent 230, and thus, if the battery cell 200 experiences thermal runaway, the blocking member 240 may not be smoothly separated from the battery cell 200.

The length of each of the first extension portion 252a and the second extension portion 252b parallel to the second direction may be greater than a length of the blocking member 240 parallel to the second direction, that is, the length between the third end portion 243 and the fourth end portion 244. The inner surfaces of the first extension portion 252a and the second extension portion 252b may be disposed to surround (e.g., to cover) the outer surfaces of both of the blocking member 240 and the cap plate 220. For example, the inner surface of the first extension portion 252a may be disposed to surround both the first end portion 241 and the outer surface of the cap plate 220, and the inner surface of the second extension portion 252b may be disposed to surround both the second end portion 242 and the outer surface of the cap plate 220. Accordingly, the inner surfaces of the first extension portion 252a and the second extension portion 252b may be attached and fixed to the outer surface of the cap plate 220 as well as the blocking member 240 and bring the blocking member 240 into close contact with the cap plate 220 by an adhesive force with the cap plate 220.

Hereinafter, a battery module according to another embodiment of the present disclosure will be described.

Accordingly, in describing the battery module according to another embodiment of the present disclosure, the blocking member, which is different from that of the battery module described above, will be primarily described. The description of the battery module as described above may be applied to the remaining aspects and features of the battery module described hereinafter.

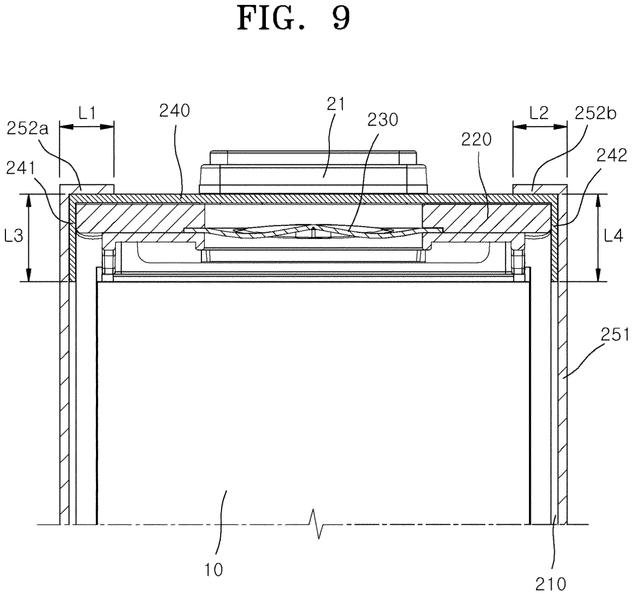

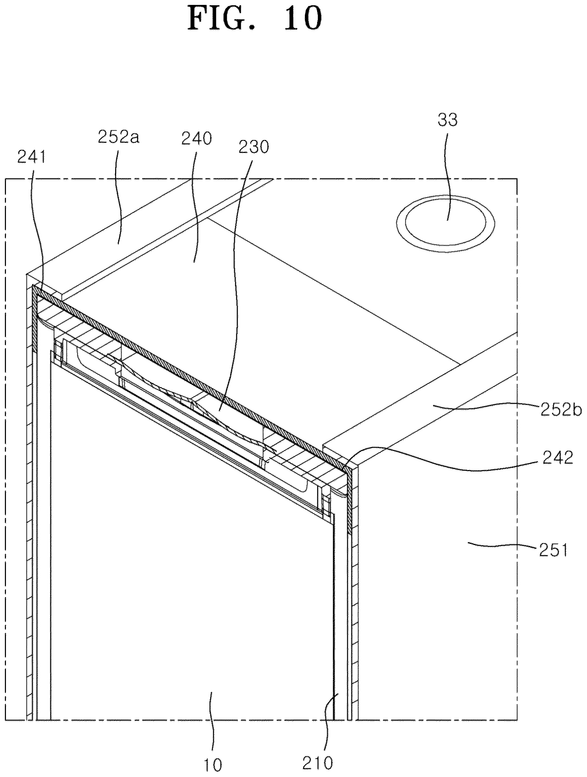

FIG. 9 is a schematic cross-sectional view illustrating a blocking member according to another embodiment of the present disclosure. FIG. 10 is a schematic cross-sectional perspective view illustrating the blocking member shown in FIG. 9.

Referring to FIGS. 9 and 10, a length between a first end portion 241 and a second end portion 242 may be greater than a length of a cap plate 220 parallel to a first direction. The first end portion 241 and the second end portion 242 may extend outwardly from the cap plate 220. Portions of the first end portion 241 and the second end portion 242 may be bent downwardly from the cap plate 220 and disposed to surround (e.g., to cover) a side surface of a case 210. Outer surfaces of the first end portion 241 and the second end portion 242 disposed to surround a side surface of the case 210 may be attached to an inner surface of a first fixing member 251. Accordingly, the blocking member 240 may be in contact with the fixing member 250 over a larger area and may be more firmly coupled to a second fixing member 252. In addition, the blocking member 240 may be more firmly fixed onto the cap plate 220 by a latching force with the first fixing member 251 and the second fixing member 252 due the bent structure of the first end portion 241 and the second end portion 242 in addition to an adhesive force with the first fixing member 251 and the second fixing member 252.

A length L3 of the first end portion 241 parallel to the side surface of the case 210 and a length L4 of the second end portion 242 parallel to the side surface of the case 210 may each be in a range of about 5 mm to about 10 mm. When the length L3 of the first end portion 241 and the length L4 of the second end portion 242 parallel to the side surface of the case 210 are each less than about 5 mm, the first end portion 241 and the second end portion 242 may be separated from the case 210 because the first end portion 241 and the second end portion 242 do not secure a sufficient contact area with the case 210. When the length L3 of the first end portion 241 and the length L4 of the second end portion 242 parallel to the side surface of the case 210 are each greater than about 10 mm, during an operation of attaching the first fixing member 251 to the case 210, excessive interference with the first fixing member 251 may occur, which may make it impossible or very difficult to maintain contact with the case 210.

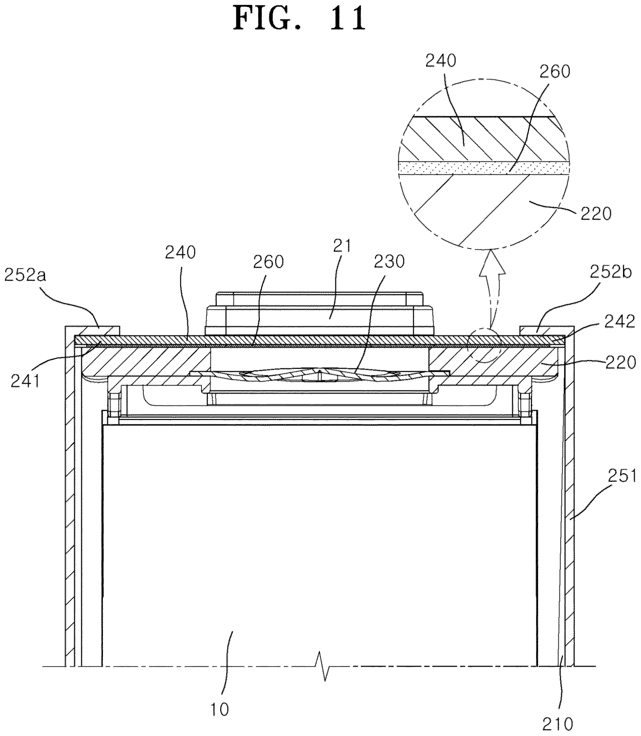

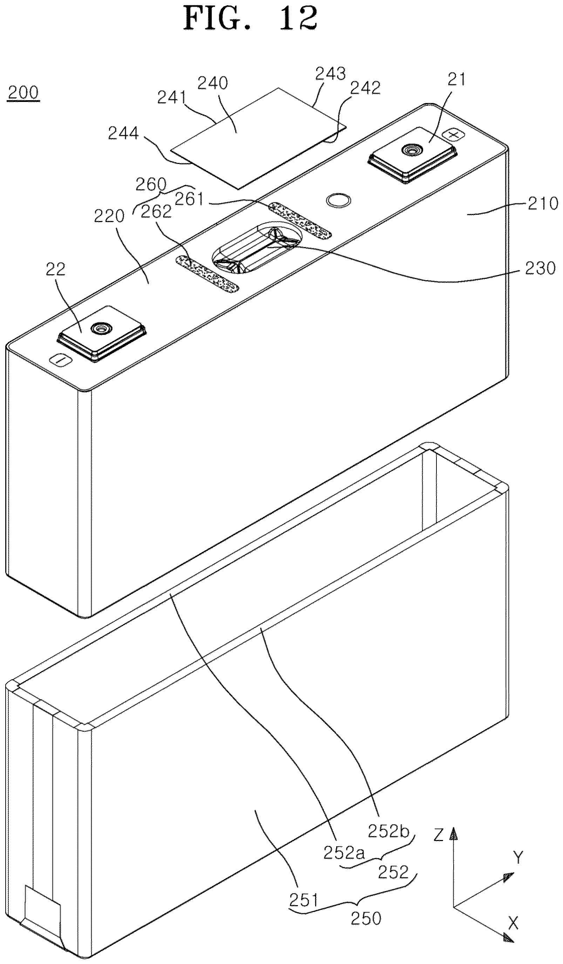

Hereinafter, a battery module according to further embodiments of the present disclosure will be described with reference to FIGS. 11 and 12.

In the battery module according to the present embodiment, a battery cell 200 may further include an adhesive member 260.

The battery module according to the further embodiments of the present disclosure may be different from the battery module described above in that it further includes an adhesive member 260.

Accordingly, in describing the battery module according to the further embodiments of the present disclosure, the adhesive member 260 will be primarily described. The description of the battery modules as described above may be applied to the remaining aspects and features of the battery module according to the other embodiments of the present disclosure.

FIG. 11 is a schematic cross-sectional view of an adhesive member according to an embodiment of the present disclosure. FIG. 12 is a schematic exploded perspective view of an adhesive member according to a further embodiment.

FIGS. 11 and 12 illustrate embodiments in which the adhesive member 260 is applied to various battery modules according to embodiments of the present disclosure, but the present disclosure is not limited thereto. The adhesive member 260 may also be applied to the battery modules according to other embodiments.

The adhesive member 260 may be disposed between a cap plate 220 and a blocking member 240 to directly fix the blocking member 240 to the cap plate 220 by its adhesive force. Accordingly, the adhesive member 260 may prevent the remaining regions of the blocking member 240, which are not in direct contact with a fixing member 250, for example, a third end portion 243 and a fourth end portion 244, from being separated from the cap plate 220. The adhesive member 260 may include an adhesive material including at least one selected from a polyester resin, an epoxy resin, a phenol resin, polyvinyl acetate, polyvinyl butyral, and polyacrylic acid ester.

The adhesive member 260 may include a first adhesive member 261 and a second adhesive member 262.

The first adhesive member 261 may be disposed between the third end portion 243 of the blocking member 240 and the cap plate 220. The first adhesive member 261 may extend in a direction in which the third end portion 243 extends, that is, in a direction parallel to a first direction.

The second adhesive member 262 may be disposed between the fourth end portion 244 of the blocking member 240 and the cap plate 220. The second adhesive member 262 may extend in a direction in which the fourth end portion 244 extends, that is, in the direction parallel to the first direction.

According to embodiments of the present disclosure, when any one battery cell experiences thermal runaway, a blocking member blocks heat from being transferred to adjacent battery cells and blocks flame or gases from flowing into vents of the adjacent battery cells, thereby preventing cascading thermal runaway of the battery cells.

According to embodiments of the present disclosure, a blocking member is installed individually for each battery cell, and the blocking members are separated from each other. Thus, when any one battery cell experiences thermal runaway, only the blocking member installed in the corresponding battery cell is separated from a cap plate or fractured, thereby preventing the heat blocking performance of the remaining battery cells from being degraded.

According to embodiments of the present disclosure, by using a fixing member, a blocking member can be fixed to a cap plate when a battery cell is manufactured, and thus, an additional process for fixing the blocking member can be avoided during an assembly process of a battery module.

According to embodiments of the present disclosure, the remaining regions of a blocking member, which are not in direct contact with a fixing member by an adhesive member, can be prevented from being separated from a cap plate.

However, the aspects and features of the present disclosure are not limited to the above aspects and features, and other technical aspects and features that are not mentioned will be clearly understood by those skilled in the art.

While the present disclosure has been described with reference to embodiments shown in the drawings, these embodiments are merely illustrative and it should be understood that various modifications and equivalent other embodiments can be derived by those skilled in the art on the basis of the embodiments.

## Claims

1. A battery cell comprising:
a case accommodating an electrode assembly;
a cap plate on the case and sealing the case;
a vent in the cap plate and configured to open in response to a change in pressure in the case;
a blocking member seated on the cap plate and facing the vent; and
a fixing member surrounding the case and the cap plate and fixing the blocking member to the cap plate.

2. The battery cell as claimed in claim 1, wherein an area of the blocking member is greater than an area of the vent.

3. The battery cell as claimed in claim 1 or claim 2, wherein the blocking member comprises mica.

4. The battery cell as claimed in any one of the preceding claims, wherein the fixing member comprises:
a first fixing member surrounding the case; and
a second fixing member extending from the first fixing member and surrounding the blocking member.

5. The battery cell as claimed in claim 4, wherein the blocking member has a first end portion and a second end portion spaced apart from each other in a first direction, and
wherein the second fixing member has a first extension portion extending from one side of the first fixing member and surrounding the first end portion and a second extension portion extending from another side of the first fixing member and surrounding the second end portion.

6. The battery cell as claimed in claim 5, wherein a length of each of the first extension portion and the second extension portion parallel to the first direction is in a range of 5 mm to 10 mm.

7. The battery cell as claimed in claim 5 or claim 6, wherein the first extension portion and the second extension portion press the first end portion and the second end portion toward the cap plate, respectively.

8. The battery cell as claimed in claim 7, wherein a length of each of the first extension portion and the second extension portion parallel to a second direction crossing the first direction is greater than a length of the blocking member parallel to the second direction, and
wherein inner surfaces of the first extension portion and the second extension portion are attached to outer surfaces of the blocking member and the cap plate.

9. The battery cell as claimed in any one of claims 5 to 8, wherein the first end portion and the second end portion are on the cap plate.

10. The battery cell as claimed in any one of claims 5 to 8, wherein the first end portion and the second end portion extend outwardly from the cap plate and cover a side surface of the case.

11. The battery cell as claimed in claim 10, wherein a length of each of the first end portion and the second end portion parallel to the side surface of the case is in a range of 5 mm to 10 mm.

12. The battery cell as claimed in any one of claims 5 to 11, further comprising an adhesive member between the cap plate and the blocking member.

13. The battery cell as claimed in claim 12, wherein the blocking member has a third end portion and a fourth end portion spaced apart from each other in a second direction crossing the first direction, and
wherein the adhesive member comprises a first adhesive member between the third end portion and the cap plate and a second adhesive member between the fourth end portion and the cap plate.

14. A battery module comprising:
a housing; and
a plurality of battery cells inside the housing, each of the battery cells being in accordance with any one of the preceding claims.
